# DEMANDE DE BREVET EUROPEEN

(11) **EP 3 257 795 A1**
(43) Date de publication de la demande: **20.12.2017**
(21) Numéro de dépôt: 17171305.0
(22) Date de dépôt: 16.05.2017
(51) Int. Cl.: B65H 1/30, B65H 5/00

(54) **FOURNITURE DE DECOUPES**

(30) Priorité: 18.06.2016 FR 1600970
(71) Demandeur: C.E.R.M.E.X. CONSTRUCTIONS ETUDES ET RECHERCHES DE MATERIELS POUR L'EMBALLAGE D'EXPEDITION, 21910 Corcelles-Les-Cîteaux (FR)
(72) Inventeur: GAUTHERON, Anthony, 21910 CORCELLES LES CÎTEAUX (FR)
(74) Mandataire: Eltzer, Thomas

(57) **Abrégé**

L'invention a pour objet un dispositif de fourniture pour fournir des découpes (1) à une machine depuis un stock configuré en plusieurs piles (2) adjacentes de découpes (1), le dispositif comprend un manipulateur (3) pour transférer par lot les découpes (1) depuis le stock jusqu'à la machine.

Ce dispositif comprend, en outre, un moyen de pression (4) pour comprimer au moins une pile (2) adjacente à celle dont le manipulateur (3) extrait des découpes (1)

L'invention a aussi pour objet un procédé correspondant.

## Description

La présente invention relève du domaine du conditionnement de produits, et a pour objet, d'une part, un dispositif de transfert de découpe, et, d'autre part, un procédé mettant en oeuvre ce dispositif.

Dans ce domaine, on utilise des machines qui créent des contenants cartonnés par pliage de feuilles carton planes, dans une étape communément appelée « formage de caisse ». La machine peut comprendre des étapes périphériques de ce formage de caisse : groupage des produits à y déposer, orientation, dépose, fermeture de caisse, etc.

Ce genre de machine présente généralement un magasin dans lequel les feuilles cartonnées sont reçues les unes contre les autres, souvent orientées quasi verticalement. Elles sont ensuite utilisées l'une après l'autre pour former, à chaque cycle, une caisse en carton.

Une machine avec un formage de caisse présente ainsi un magasin d'où les découpes sont tirées l'une après l'autre. Ce magasin assure l'autonomie de la machine et peut contenir un grand nombre de découpes.

Il est avantageux d'alimenter ce magasin en découpes de façon automatique. Ainsi, des solutions robotiques existent, qui saisissent de façon cyclique plusieurs découpes de carton simultanément et les déposent dans le magasin. Les découpes se trouvent initialement sur une palette, superposées les unes aux autres en piles l'une à côté de l'autre sur ladite palette.

EP2899149, US4551053, US6332750, ou encore US2002154986 proposent par exemple des outillages qui saisissent un lot de découpes afin de l'amener dans le magasin d'une machine.

Un problème peut apparaître lorsque les découpes sont initialement non reliées en entre elles. Elles sont alors susceptibles de se déplacer parallèlement à leur plan, jusqu'à éventuellement perturber une pile à côté, en s'y insérant, par exemple. Les découpes de carton s'intercalent ainsi éventuellement dans une colonne à côté. En outre, on comprend que les découpes d'une pile peuvent toucher celles d'une autre pile et déstabiliser cette dernière lorsqu'elles sont prélevées, c'est-à-dire entraîner l'autre pile lorsqu'elles sont bougées. De façon générale, l'insertion même très faible d'une découpe entre deux découpes d'une autre pile peut amener amener une perturbation d'une pile à l'occasion du déplacement de découpes d'une autre pile. De plus, les outils classiques pour saisir un lot de découpes libres reposent généralement sur une pince qui vient être approchée de la pile de découpes, voire insérée entre deux découpes successives. Cette insertion peut amener les découpes à se chevaucher comme décrit ci-dessus.

Dans ce contexte, un des buts de l'invention est d'éviter de perturber l'empilement de découpes au sein d'une pile lorsque des découpes sont extraites d'une autre pile, et ce de façon simple, fiable, et peu couteuse.

Pour ce faire, l'invention propose d'exercer une force de compression qui stabilise les découpes au niveau d'au moins l'une des piles à côté de celle dont des découpes sont extraites.

L'invention a ainsi pour objet un dispositif de fourniture pour fournir des découpes à une machine depuis un stock configuré en plusieurs piles adjacentes de découpes, le dispositif comprenant un manipulateur pour transférer par lot les découpes depuis le stock jusqu'à la machine.

Ce dispositif est caractérisé en ce que
il comprend, en outre, un moyen de pression pour comprimer au moins une pile adjacente à celle dont le manipulateur extrait des découpes.

L'invention a aussi pour objet une méthode mise en oeuvre par ce dispositif, à savoir un procédé de fourniture de découpes à une machine, depuis un stock sous forme de piles côte à côte, en une ou plusieurs couches, comprenant une étape consistant à saisir, à l'aide d'un manipulateur, un lot de découpes d'une desdites piles puis à le déposer dans la machine.

Ce procédé est caractérisé en ce que
il comprend, en outre, une étape consistant essentiellement à exercer une force de compression sur une pile qui se situe à côté de la celle à partir de laquelle le lot est saisi.

L'invention sera mieux comprise grâce à la description ci-dessous, qui se base sur des modes de réalisations possibles, expliqués de façon illustrative et nullement limitative, en référence avec les figures annexées, dans lesquelles :
- la figure 1 montre une palette sur laquelle reposent plusieurs colonnes de découpes, les unes à côté des autres, les colonnes étant formées de plusieurs tronçons successifs ;
- la figure 2 en montre une vue de dessus, avec une masse disposée sur la colonne du milieu pour la stabiliser alors qu'un lot de découpes est extrait de la pile du bas de la figure ;
- la figure 3 montre l'étape suivante, où la masse repose sur la colonne en haut de la figure alors que c'est la colonne du milieu dont les découpes sont transférées ;
- la figure 4 montre l'étape d'extraction du dernier lot d'une même couche sur la pile la plus en haut, avec la masselotte en attente à l'extérieur de la zone de palette ;
- les figures 5 à 9 montrent un procédé identique d'extraction d'une couche de découpes, avec quatre piles.

L'invention a donc tout d'abord comme objet un dispositif de fourniture pour fournir des découpes 1 à une machine depuis un stock configuré en plusieurs piles 2 adjacentes de découpes 1, le dispositif comprenant un manipulateur 3 pour transférer par lot les découpes 1 depuis le stock jusqu'à la machine.

Dans le stock d'où elles sont tirées, les découpes 1 sont donc superposées sous forme de piles 2 sur une palette.

Une pile 2 peut s'étendre depuis la palette jusqu'à la découpe 1 la plus haute, et être ainsi formée de toutes les découpes 1 qui se trouvent dans le prolongement de la première, la plus basse, sur le support palette.

Dans certains autres cas, les découpes 1 sont organisées en couches superposées, chaque couche comprenant plusieurs piles 2 de plus faible hauteur, les unes à côté des autres. Par exemple, un intercalaire de la superficie de la palette peut s'étendre entre deux couches successives. Il est ainsi nécessaire de transférer les unes après les autres les piles 2 d'une même couche, avant de transférer les unes après les autres les piles 2 de la couche inférieure, etc.

Le dispositif de fourniture sert alors à alimenter la machine en découpes 1 de façon cyclique, avec plusieurs découpes 1 à chaque cycle. Le manipulateur 3 est donc muni d'une tête qui peut se déplacer entre le stock, dans le prolongement vertical de la palette, et le magasin de réception de la machine.

Les découpes 1 sont libres les unes par rapport aux autres, ce qui peut amener l'une d'elles à légèrement se déplacer vers une pile 2 d'à côté. En outre, on comprend que pour des raisons de compacité, les piles 2 sont proches l'une de l'autre sur la palette. Lors de l'action du manipulateur 3 les découpes 1 qu'il traite peuvent toucher une pile 2 adjacente et, comme les découpes 1 qui forment cette dernière sont libres et créent une pile 2 qui peut être légèrement instable, la pile 2 adjacente peut tomber, ou simplement être perturbée jusqu'à rendre difficile voire impossible la saisie ultérieure de ses découpes 1.

Ainsi, selon l'invention, le dispositif comprend, en outre, un moyen de pression 4 pour comprimer au moins une pile 2 adjacente à celle dont le manipulateur 3 extrait des découpes 1. Ces découpes 1, qui forment la partie supérieure de la pile 2, en sont extraites pour être amenées au magasin de la machine.

Ce moyen de pression 4 sert à stabiliser au moins une pile 2 qui est contre celle dont le manipulateur 3 extrait des découpes 1. Un des buts est d'éviter que dégager des découpes 1 d'une pile soit suivi de perturbations sur une pile 2 à côté.

Ce moyen de pression 4 exerce donc une force dans l'axe de la pile 2, c'est-à-dire perpendiculaire au plan des découpes 1. Généralement, les découpes 1 sont horizontales et les piles 2 s'étendent donc dans un axe vertical. La force exercée par le moyen de pression 4 a donc une composante verticale. Bien qu'il existe de multiples façons d'exercer une telle force verticale, une façon simple est de disposer un poids au dessus de la au moins une pile 2. Le moyen de pression 4 peut prendre la forme d'une masselotte ou autre élément de masse suffisante.

Cette force doit préférablement réduire l'espace vertical entre les bords de deux découpes 1 successives, et/ou augmenter le frottement plan horizontal entre deux découpes 1 sucessives.

Ainsi, dans certains modes de réalisation, le moyen de pression 4 comprend un bloc 5 déplaçable, dont le poids s'exerce sur la pile 2 sur laquelle il est posé. Le bloc 5 est donc déplacé pour être posé sur la pile 2 déterminée, en fonction de la pile 2 d'où le manipulateur 3 va dégager des découpes 1. Le bloc 5 s'étend préférablement sur une partie seulement de la superficie d'une découpe 1. Autrement dit, le bloc 5 repose au dessus de la pile 2, en appui sur la découpe 1 la plus haute de la pile 2. Le moyen de pression 4 peut comprendre plusieurs tels blocs 5, chacun pouvant être disposé sur une pile 2 à côté de celle traitée par le manipulateur 3, qui traite normalement une pile 2 depuis le côté. On utilise alors simplement le poids d'un bloc 5 pour exercer la force verticale requise pour stabiliser la pile 2 sous lui.

Le bloc 5 est donc préférablement positionné au dessus de la au moins une pile 2 qui doit être stabilisée. Le au moins un bloc 5 est déplacé pour être posé sur la pile 2 qui le requiert. Une solution simple pour déplacer le bloc 5 peut alors être de le déplacer grâce au manipulateur 3, ce dernier étant nécessairement présent pour déplacer les découpes. En outre, comme le manipulateur 3 transfert à chaque cycle un lot de plusieurs découpes 1, il lui est possible de déplacer lui-même le bloc 5 à l'endroit nécessaire au moment opportun, sans impacter la cadence de traitement de la machine d'encaissage ou formeuse de caisse.

Ainsi, selon une caractéristique additionnelle possible, le manipulateur 3 et le au moins un bloc 5 sont adaptés pour coopérer de sorte que le manipulateur 3 de transfert de lots de découpes 1 assure aussi la saisie, le déplacement et la dépose dudit bloc 5. Le manipulateur 3 peut donc non seulement saisir et déplacer des groupes de découpe 1, mais aussi au moins un bloc 5. Il est envisageable qu'un même élément du type pince serve tant à saisir un lot de découpes 1 superposées qu'un bloc 5. Le bloc peut être de forme parallélépipédique rectangle, cube ou autres, avec des faces planes, parallèles ou perpendiculaires.

Dans certains modes de réalisation, le manipulateur 3 est muni d'une pince formant étau pour saisir le bloc 5, ce dernier étant notamment, en outre, muni de surfaces particulièrement rugueuses, pour assurer ainsi la tenue du bloc 5 dans ladite pince. La même pince peut alors servir à tenir un lot de découpes 1. Le lot saisi peut former l'intégralité des découpes 1 dans une couche, depuis un intercalaire qui délimite, dans le sens vertical, deux piles 2 superposées.

Selon une caractéristique additionnelle possible, le dispositif présente un récepteur 6, qui peut recevoir le bloc 5 lorsqu'il ne repose pas sur une pile 2. Le récepteur 6 et le bloc 5 sont notamment adaptés pour présenter une complémentarité formant détrompage assurant un maintien préféré du bloc 5 dans le récepteur 6 lorsque ledit bloc 5 y est positionné dans une position prédéfinie.

Le récepteur 6 comprend notamment aussi, dans certains cas, un détecteur 7 identifiant la présence du bloc 5 dans le récepteur 6, voire sa position conformément à la position prédéfinie.

Par exemple, le détrompage peut assurer que le bloc 5 s'enfonce correctement et complètement dans le récepteur 6 de forme au moins partiellement complémentaire uniquement s'il est dans une certaine orientation spatiale. Le détecteur 7, du type détecteur à ultrason ou autres, peut alors être positionné de sorte à ne détecter le bloc 5 que s'il est complètement engagé dans le récepteur 6, à fond de butée.

Ce détrompage est particulièrement utile dans la mesure où le manipulateur 3 doit pouvoir saisir le bloc 5 depuis le récepteur 6 de façon stable et robuste. Le récepteur 6 peut comprendre une platine horizontale, qui peut recevoir sur elle le bloc 5. Le bloc 5 et le récepteur 6 peuvent avoir une complémentarité de force assurant un positionnement particulier dès lors que le bloc 5 est dans une orientation partticulière.

Comme déjà évoqué, le bloc 5 est normalement, sauf situations d'arrêt exceptionnel, amené dans le récepteur 6 ou en est extrait par le manipulateur 3 directement, qui en maîtrise donc l'orientation spatiale.

L'invention a aussi pour objet un procédé mettant en oeuvre le dispositif tel que décrit ci-dessus, à savoir un procédé de fourniture de découpes 1 à une machine, depuis un stock sous forme de piles 2 côte à côte, en une ou plusieurs couches, comprenant une étape consistant à saisir, à l'aide d'un manipulateur 3, un lot de découpes 1 d'une desdites piles 2 puis à le déposer dans la machine, en particulier au niveau d'un magasin de réception qu'elle présente.

Le lot de découpes 1 saisi et amené au magasin de la machine s'étend depuis la découpe 1 la plus haute de la pile 2. Le lot peut ainsi être constitué de la partie supérieure d'un pile 2, s'étendant éventuellement depuis le support palette, ou depuis un intercalaire définissant une couche. Le lot peut aussi être constitué de toute la pile 2 elle-même, dans le cas par exemple ou le stock de découpes est formé de plusieurs couches successives, délimitées par des intercalaires horizontaux, chaque couche comprenant plusieurs piles 2 côte à côte.

Selon l'invention, le procédé comprend, en outre, une étape consistant essentiellement à exercer une force de compression sur une pile 2 qui se situe à côté de la celle à partir de laquelle le lot est saisi, ladite force de compression visant en particulier à serrer les unes contre les autres les découpes 1 superposées dans la pile 2 concernée, dite pile 2 adjacente.

Cette force de compression a donc une composante principale perpendiculaire au plan des découpes 1 elles mêmes.

Sur la palette, vu de haut, les piles 2 sont disposées les unes à côté de autres le long de l'un des deux bords du support palette, de forme rectangle. Le manipulateur aborde la pile 2 avec une direction d'insertion. On comprend qu'au moins un bord de la pile 2 dont il extrait les découpes 1 doit donc être dégagé pour qu'il vienne contre elle depuis le côté. La au moins une pile 2 au dessus de laquelle le bloc 5 est déposé se trouve donc contre la pile 2 que traite le manipulateur 3, au niveau d'un autre bord que celui qui est ouvert pour l'accès du manipulateur 3.

Selon une caractéristique additionnelle possible, la force de compression est obtenue grâce au poids d'un bloc 5 mobile qui vient être positionné sur le haut de la pile 2. Ce bloc 5 est donc autonome et déplacé au besoin sur la pile 2 à stabiliser.

Selon une caractéristique additionnelle possible, le bloc 5 est déposé sur ou pris depuis un récepteur 6 recevant le bloc 5 lorsqu'il n'est pas sur une pile 2, localisé à l'extérieur d'une zone accueillant les piles 2 à traiter. Les découpes 1 à traiter sont normalement déposées sur une palette support, qui forme donc la partie basse du stock qui se trouve dans la zone accueillant les piles 2. Le bloc 5 peut se trouver soit sur une pile 2 à stabiliser, soit logé dans un récepteur 6. Le récepteur 6 fait donc partie du dispositif de fourniture, alors que le support palette et les éventuelles découpes 1 qu'il contient, changent à chaque production. On comprend en effet qu'une production se répète, hormis des arrêts en cours de production, pour plusieurs palettes successives. Chaque palette est déchargée pour alimenter ses découpes 1 au magasin. On peut envisager de traiter successivement des couches qui forment, chacune, une certaine hauteur de l'empilement total. Une fois que la couche est traitée pour chaque pile 2, on traite la couche de niveau inférieur, et ainsi de suite.

Ainsi, dans des modes de réalisation possibles, les découpes 1 sont transférées par couche formée par les lots similaires en haut des piles 2 traitées successivement, le bloc 5 étant déposé au niveau du récepteur 6 avant la saisie du dernier lot de la couche et puis y étant pris avant la saisie du premier lot de la couche suivante.

Enfin, dans des configurations avantageuses, le déplacement du bloc 5 mobile est opéré par le manipulateur 3. Un même moyen robotique, ou manipulateur 3, a donc pour fonction non seulement de déplacer des découpes jusque dans le magasin, mais aussi de gérer la position du au moins un bloc 5, et donc le saisir, le déplacer, le déposer, l'orienter, etc.

Dans le mode de réalisation illustré aux figures annexées, la machine concernée est du type machine d'encaissage. Une telle machine comprend un module de formage de caisses en carton. Ce module de formage utilise donc des feuilles cartonnées et les plie selon des lignes de pliage prédéfinies pour obtenir des caisses cartonnées.

Le fonctionnement de cette machine est cyclique, de sorte qu'elle utilise une découpe de cartons après l'autre. Bien entendu, l'invention est applicable à d'autres types de machine, comme par exemple des machines dont l'unique fonction est le formage d'une caisse cartonnée.

L'invention comprend une solution d'alimentation d'une telle machine en découpes de carton, dont le pliage ultérieur aboutira à l'obtention d'un récipient cartonné. La machine présente un magasin de réception dans lequel une pluralité de découpes peut être reçue. La machine consomme ensuite successivement une découpe après l'autre pour l'obtention desdites caisses. Les découpes 1 sont chargées dans le magasin de cette machine grâce à un dispositif de fourniture qui va être décrit.

Initialement, les découpes 1 se trouvent empilées les unes sur les autres dans une zone à l'extérieur de la machine. Le dispositif de fourniture saisit les découpes 1 et les amène dans le magasin d'alimentation de la machine. La découpe 1 prend ainsi la forme d'une feuille cartonnée plate présentant éventuellement des lignes de pliage préférentiel, ainsi qu'éventuellement des échancrures depuis son périmètre. À chaque cycle de fonctionnement, la machine extrait ainsi une découpe 1 depuis son magasin et la plie de sorte à obtenir le récipient cartonné. Le dispositif de fourniture fonctionne pour alimenter le magasin en découpes 1. Ces découpes 1 se trouvent initialement à l'extérieur de la machine dans une zone de réception initiale.

Dans cette zone de réception initiale, les découpes 1 sont empilées les unes sur les autres sur une palette en bois généralement posée au sol. Plusieurs piles 2 s'étendent depuis la palette et se trouvent les unes à côté des autres. Les découpes successives peuvent être séparées par un intercalaire commun à toute la palette, définissant alors à chaque fois une couche qui comprend plusieurs piles 2 l'une à côté de l'autre.

Préférablement au début du cycle, les piles 2 ont chacune la même hauteur. Le dispositif de fourniture saisit alors à chaque cycle de fourniture au magasin de la machine plusieurs découpes qui forment la partie supérieure d'une des piles 2, voire toute la pile 2. Au sein d'une pile 2, les découpes 1 ne sont normalement pas reliées les unes aux autres. Un problème peut donc apparaître, qui est l'éventuel glissement d'une ou plusieurs découpes 1 d'une pile 2 jusque vers une autre pile 2 située à côté. On comprend que les découpes 1 sont de forme globalement rectangulaire et que les piles 2 ainsi obtenues se touchent l'une l'autre au niveau d'un bord plan vertical qui présente des rugosités qui forment des accroches.

Le dispositif de fourniture comprend un manipulateur 3 préférablement sous forme d'actionneur robotique. Ce manipulateur 3 est capable de se déplacer entre d'une part la zone de réception initiale dans laquelle se trouvent les découpes 1 jusqu'à la zone du magasin de la machine. L'amplitude du mouvement de ce manipulateur 3 est telle qu'elle lui permet d'atteindre ces deux zones. Le manipulateur 3 présente préférablement à son extrémité libre une tête de préhension. Cette tête présente préférablement une forme de pince ou d'étau grâce à laquelle une pluralité de découpes 1 superposées peuvent être saisies puis déposées dans le magasin de la machine. Ainsi, la tête du manipulateur 3 peut naviguer entre la zone où se trouvent la palette et les piles 2 de découpe 1 et le magasin. À chaque cycle de fonctionnement du manipulateur 3, le dispositif de fourniture amène à la machine un groupe ou un lot de découpes 1.

Autrement dit, le manipulateur 3 à chaque cycle de fonctionnement prend une partie supérieure de l'une des piles 2 et la dépose dans le magasin de la machine. Le manipulateur 3 répète cette opération de manière successive. Ainsi, dans un cycle de fonctionnement classique, le manipulateur 3 saisit la partie d'extrémité supérieure d'une des piles 2, la dépose dans le magasin puis saisit l'extrémité d'une autre pile 2 et ainsi de suite. Ainsi, à chaque cycle de transfert opéré par le manipulateur 3 depuis la zone palette jusqu'au magasin, c'est un lot d'une certaine épaisseur qui est transféré de la zone de réception initiale au magasin, ce lot pouvant former toute la pile 2 dans les cas d'intercalaires successifs définissant des couches de plusieurs piles 2, courtes. On comprend qu'un cycle complet peut alors consister à traiter successivement la même hauteur de chaque pile 2 jusqu'à avoir diminué de façon similaire la hauteur de chacune d'elles.

On fonctionne ainsi en alimentant la machine avec un cycle global au cours duquel une couche entière de découpes 1 est alimentée dans la machine. Cette couche est formée dans la partie supérieure de chacune des piles 2. Sur la palette, les découpes 1 s'étendent préférentiellement de façon horizontale, les piles 2 s'étendant alors quant à elles dans un axe vertical. La tête du manipulateur 3, afin de saisir une partie d'extrémité de l'une des piles 2, effectue au moins à la fin de son mouvement un déplacement qui est lui aussi horizontal. Il se peut alors que les découpes 1, qui sont dans la pile 2 dont le manipulateur 3 va saisir l'extrémité supérieure, se déplacent légèrement horizontalement et interfèrent avec la pile adjacente, dans la direction du mouvement du manipulateur 3.

Pour éviter les perturbations excessives sur cette pile 2 adjacente, l'invention propose d'exercer sur cette dernière une légère force qui permettra de presser les unes contre les autres les découpes 1 qui la constituent. Ainsi, le manipulateur 3 saisit un ensemble de découpes 1 qui forment la partie d'extrémité supérieure d'une pile nommée « pile en cours ». La pile 2 dite pile adjacente est une pile qui se trouve à côté de la pile en cours, éventuellement dans la direction du mouvement du manipulateur 3. Afin de stabiliser cette pile adjacente, l'invention propose d'exercer à partir de son bord supérieur une force verticale orientée par le bas. Bien entendu, la pile adjacente, qui reçoit le bloc 5 peut aussi se trouver ailleurs. De façon générale, la pile adjacente se trouve normalement contre la pile 2 en cours, une face verticale de l'une étant contre une face verticale de l'autre.

De façon générale, cette force verticale orientée vers le bas, qui a pour effet de serrer l'une contre l'autre verticalement les découpes 1 qui constituent cette pile 2, peut être exercée sur au moins l'une des piles 2 qui a un bord contre la pile 2 dont le manipulateur 3 saisit la partie supérieure. Concrètement, la pile 2 sur laquelle la force verticale sera exercée peut se trouver à gauche, à droite, derrière, devant par rapport à la pile 2 en cours. La pile 2 adjacente ne subit pas cette force verticale.

Le moyen de serrage est préférablement sélectif, ce qui signifie qu'il comprime au moins une pile 2 particulière à un moment particulier. Dans des cas alternatifs, il est envisageable que plus d'une autre pile 2 soit ainsi comprimée, voire que chacune des piles 2 autres que la pile 2 en cours subisse cette force verticale. On comprend que cette force verticale de maintien en position de la pile 2 doit être exercée au moins lorsque le manipulateur 3 traite la partie supérieure d'une autre pile 2.

Dans des modes de réalisation possibles, ce moyen de serrage ou de pression peut être un système articulé. Dans des réalisations particulièrement simples, comme illustré dans les figures annexées, le moyen de pression repose essentiellement sur un bloc 1 dont le poids crée la force verticale, depuis le haut de la pile 2 en question. Ainsi, pour obtenir l'effort de compression souhaité, le dispositif de fourniture prévoit de déposer sur le haut de la pile 2 à sécuriser un bloc 5 dont la masse est telle qu'il va exercer une force suffisante pour maintenir les découpes 1 l'une contre l'autre verticalement. Ce bloc 5 comprime donc au moins légèrement la pile 2.

Cette action ne s'associe cependant pas nécessairement à une variation dimensionnelle notable de la pile 2 verticale. En outre, l'action créée par la présence du bloc 5 n'est nécessaire que sur une hauteur de la pile 2 adjacente qui correspond approximativement à la hauteur du lot de découpes 1 que le manipulateur 3 extrait de la pile 2 en cours. La force verticale exercée par ce bloc 5 a donc pour effet de créer une friction suffisante dans un plan horizontal entre les découpes 1 successives, ce qui évite tout risque à l'occasion du traitement de la pile 2 en cours. On évite ainsi toute perturbation de la pile 2 adjacente, puisque les découpes 1 qui la constituent ne seront pas bougées par le mouvement du lot extrait de la partie supérieure de la pile 2 en cours.

Le bloc 5, ou moyen de pression, est préférablement un élément indépendant avec une surface inférieure plane. Ce bloc 5 est libre en position et peut être déposé à n'importe quel endroit. Autrement dit, il s'agit d'un contrepoids ou masselotte qui peut être déposé sur à peu près n'importe quelle surface horizontale. On comprend que dans certaines installations, le dispositif de fourniture peut comprendre un actionneur dont la fonction principale est le déplacement de ce bloc 5 et son positionnement sur la pile 2 à stabiliser. Néanmoins, on comprend aussi que le dispositif de fourniture présente un manipulateur 3 qui, compte tenu de sa fonction essentielle de transfert des découpes 1, a l'amplitude géométrique nécessaire pour se déplacer au-dessus de la zone dans laquelle se trouvent les découpes 1.

Ainsi, il est avantageux d'utiliser le manipulateur 3 existant, dont la fonction essentielle est le transfert des découpes 1, pour qu'il déplace lui-même le bloc 5. On obtient ainsi un dispositif de fourniture dans lequel un seul et même moyen assure d'une part le déplacement des découpes 1 jusqu'au magasin et d'autre part le déplacement du bloc 5 jusqu'au-dessus de la pile 2 adjacente à sécuriser. De façon générale, le dispositif de fourniture peut comprendre plusieurs blocs 5 qui sont positionnés sur soit une seule et même pile 2, soit plusieurs, voire une pile 2 différente pour chacun d'eux. Le manipulateur 3 assure donc le positionnement de ce au moins un bloc 5 au bon endroit et au bon moment par rapport à la saisie des découpes 1. Le manipulateur 3 a ainsi une tête de préhension grâce à laquelle il peut saisir un lot de découpes 1 et il est aussi muni d'un élément du type pince pour saisir le bloc 5. On notera qu'il peut s'agir de la même pince.

Le dispositif de fourniture comprend de façon préférable un châssis auquel est fixé le manipulateur 3. La palette sur laquelle se trouvent les piles 2 vient alors être placée à côté de ce châssis. Le dispositif de fourniture comprend un récepteur 6 pour recevoir le au moins un bloc 5 lorsque celui-ci n'est pas déposé sur le haut d'une pile 2. L'avantage d'un récepteur 6 de position définie est que la solution robotique du manipulateur 3 peut fonctionner avec une donnée représentative de la position par défaut du bloc 5. En effet, dès lors que le bloc 5 n'est pas sur une pile 2, il doit se trouver dans le récepteur 6. Ce dernier présente ainsi préférablement une surface d'accueil horizontale sur laquelle le bloc 5 peut être déposé. Cette surface peut être portée par une platine s'étendant en porte-à-faux depuis le châssis du dispositif de fourniture. Un détecteur 7 peut être prévu afin de détecter la présence ou l'absence de au moins un bloc 5 dans la zone du récepteur 6.

Par exemple, la forme du bloc 5 et celle du récepteur 6 peuvent être telles qu'elles présentent une complémentarité particulière dans une position prédéfinie de sorte à former une fonction de détrompage. Ainsi, une position ou réception complète du bloc 5 dans le récepteur 6 n'est possible que si le bloc 5 se trouve dans une certaine orientation. Une telle solution de détrompage repose par exemple sur un jeu de rainures, nervures ou autres éléments convexes et/ou concaves. Lorsque le bloc 5 est positionné dans le récepteur 6 avec l'orientation prédéfinie, il atteint une position dans laquelle il est détectable par le détecteur 7. Par exemple, une insertion de plus grande amplitude du bloc 5 dans le récepteur 7 peut être envisagée pour peu que le bloc 5 soit dans l'orientation correspondant à ce détrompage.

Le récepteur 6 est préférablement hors de la zone de palette. Le fait d'avoir un récepteur 6 qui ne se trouve pas dans le prolongement vertical d'une palette permet au manipulateur 3 de naviguer librement sur toute la surface de la palette, sans risque d'entrer en collision avec le au moins un bloc 5. Dans des modes de réalisation alternatifs, le manipulateur 3 peut être lui-même muni d'une solution de détection, par exemple par laser. Le manipulateur 3 vient alors balayer la zone du récepteur 6 et peut détecter si le bloc 5 s'y trouve et quelle est exactement sa position. Cette alternative est envisageable dans les cas où le manipulateur 3 est déjà muni d'un tel détecteur, par exemple pour mesurer de façon précise la hauteur de chacune des piles 2, celles-ci pouvant être différentes, en particulier lorsqu'un cycle démarre avec une palette sur laquelle se trouvent des piles 2 qui ont déjà été partiellement utilisées dans une production antérieure.

On va maintenant décrire un cycle de transfert d'un lot de découpes 1. Dans une première étape, le manipulateur 3 va chercher le bloc 5 là où il se trouve. Sa position est de façon préférable mémorisée par une unité de contrôle centralisé du dispositif de fourniture. Le bloc 5 se trouve soit sur l'une des piles 2, soit dans le récepteur 6. Cette première étape qui consiste à chercher le bloc 5 peut bien entendu être exécutée de façon différente s'il s'agit, comme il sera décrit plus loin, du premier lot d'une couche horizontale, voire du premier lot après un arrêt d'urgence ou une anomalie. Une fois que le manipulateur 3 a saisi le bloc 5 là où il se trouve, il le déplace jusqu'à le déposer sur une pile 2 qui se trouve à côté de la pile 2 dont il va prendre l'extrémité supérieure pour l'amener dans le magasin de la machine.

Comme il a été précisé, les découpes 1 ont une forme essentiellement rectangulaire. La pile 2 en cours et la pile 2 adjacente, au-dessus de laquelle le bloc 5 est déposé, se touchent donc au niveau de chaque fois un bord de ces découpes 1, qui forment ensemble une paroi verticale. Alternativement, si le futur lot à transférer est le dernier lot de la couche, le manipulateur 3 dépose alors le bloc 5 dans le récepteur 6. En effet, comme il s'agit du dernier lot d'une même couche horizontale, on comprend qu'il n'existe dans le prolongement horizontal du lot à traiter aucune découpe 1 susceptible d'être bougée lors de l'action du manipulateur 3 ou de subir des interférences ou perturbations à cause des transferts. Une fois le bloc 5 posé au bon endroit, le manipulateur 3 va saisir un lot de découpes 1, ce lot formant une partie de l'extrémité supérieure de la pile 2. Comme il a déjà été expliqué, la pile 2 en cours se trouve entre le manipulateur 3 et la pile 2 sur laquelle se trouve le bloc 5 dans le sens du mouvement du manipulateur 3 lors de sa prise des découpes 1.

Une fois le lot saisi, il reste ainsi simplement au manipulateur 3 à déplacer ce lot jusqu'à l'amener à la machine puis à y libérer les découpes 1. De façon préférée, après avoir traité un lot dans une pile 2, le procédé se poursuit par le traitement d'un lot d'une même épaisseur à partir du haut d'une pile 2 située à côté de celle qui vient d'être traitée. On comprend que le manipulateur 3 procède en extrayant la partie supérieure d'une pile 2 se trouvant à la périphérie du profil formé par l'ensemble des découpes 1 qui se trouvent sur la palette. Les découpes 1 superposées sur la palette sont préférablement transférées dans la machine par couche. Ainsi dans une première étape, le dispositif de fourniture alimente dans la machine un lot de découpes 1 qui forme la partie supérieure d'une certaine hauteur pour l'une des piles 2.

Le cycle suivant consiste essentiellement à extraire la même partie d'extrémité formant un lot depuis une pile 2 à côté de celle précédemment traitée. Ce cycle est répété jusqu'à ce que toutes les piles 2 aient la même hauteur. Une fois que toutes les piles sont à la même hauteur, on comprend que le dispositif de fourniture peut commencer le traitement d'une couche de niveau inférieur. Chaque couche correspond en termes de dimension verticale à la hauteur d'un lot qui est extrait de chacune des piles 2. Lorsque le dispositif de fourniture en arrive à traiter le dernier lot d'une couche, le bloc 5 est au préalable déposé dans le récepteur 6. Autrement dit, le dernier lot d'une couche est traité sans que le bloc 5 soit utilisé comme moyen de pression depuis l'extrémité supérieure d'une autre pile 2.

Le procédé est similaire lorsque le lot est formé par toute la pile, dans le cas de piles 2 posées sur des intercalaires couvrant toute la surface de la palette.

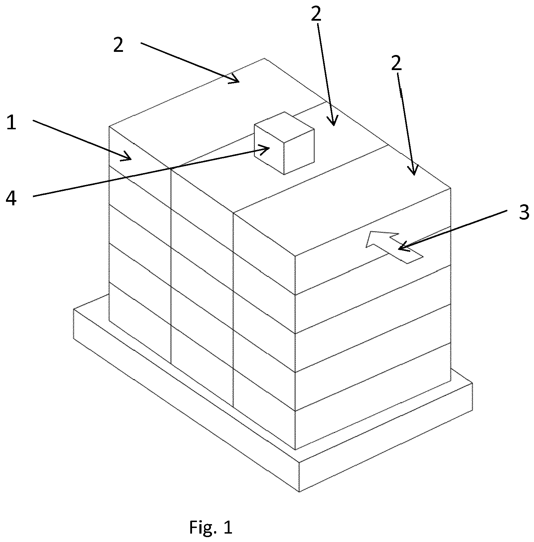

Les configurations de positionnement des découpes 1 sur une palette sont variées. Ainsi la figure 1 montre une palette sur laquelle se trouvent trois piles 2 les unes à côté des autres. La figure 1 montre que le dispositif de fourniture 1 alimentera la machine avec cinq cycles successifs, une couche horizontale étant traitée intégralement lors de chaque cycle. La figure 1 montre que le dispositif de fourniture traite un groupe de découpes 1 dans la partie supérieure de la pile 2. Lors de ce traitement, le bloc 5 se trouve sur la pile 2 suivante dans la direction du manipulateur 3.

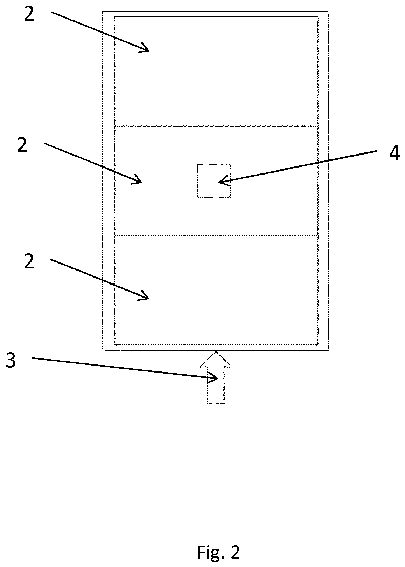

La figure 2 illustre cette même étape vue de haut.

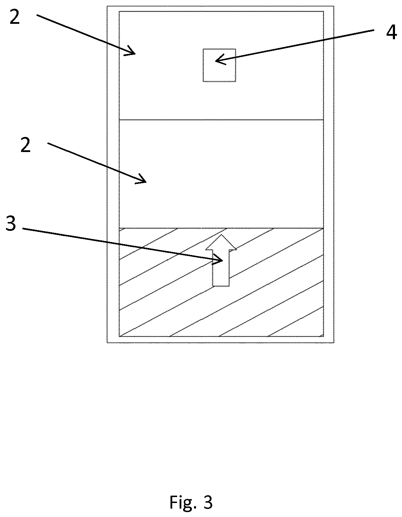

La figure 3 montre le traitement du lot de la même couche dans la pile 2 du milieu. Lors de cette étape, le bloc 5 se trouve sur la troisième pile 2.

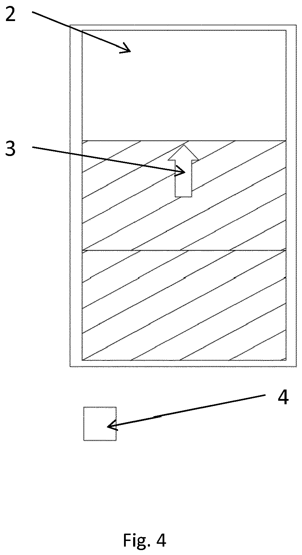

La figure 4 montre enfin le traitement par le manipulateur 3 du dernier lot de la couche, lors duquel le bloc 5 se trouve dans le récepteur 6.

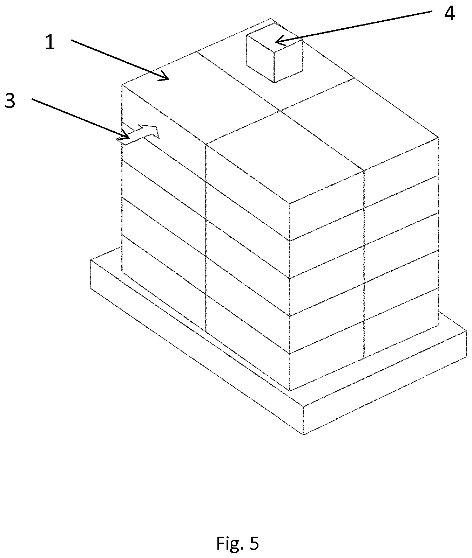

La figure 5 montre une configuration dans laquelle les découpes 1 sont organisées en quatre piles 2 agencées en rectangle. Chaque pile 2 a ainsi deux de ses bords en contact avec une autre pile 2. Lors de la première étape du cycle lors duquel la première des cinq couches sera transférée, le manipulateur 3 arrive pour saisir le lot en haut à gauche. Le bloc 5 repose sur la pile 2 dans le prolongement du mouvement du manipulateur 3.

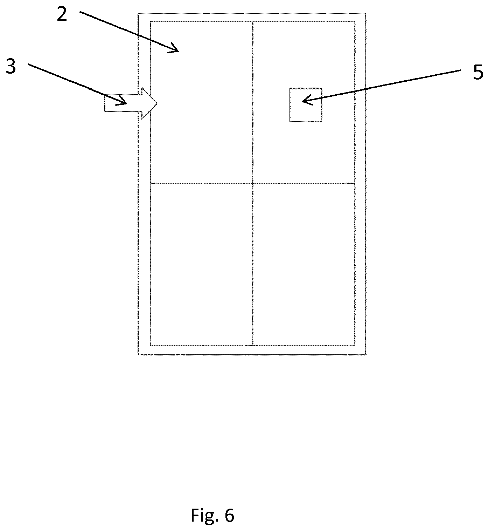

La figure 6 est une vue de dessus.

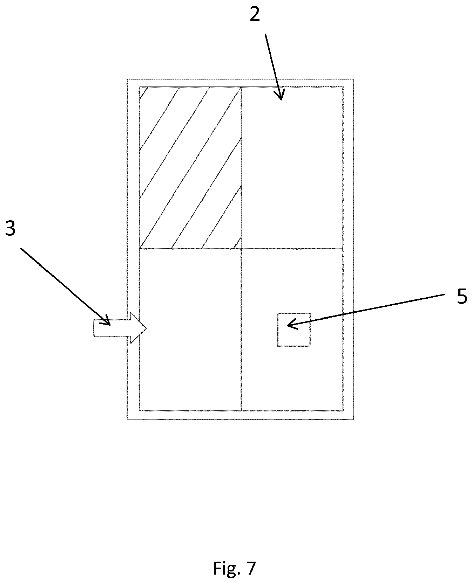

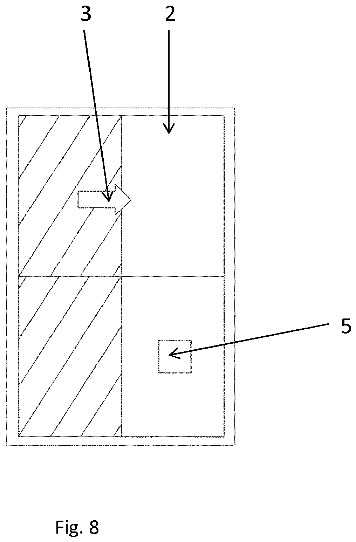

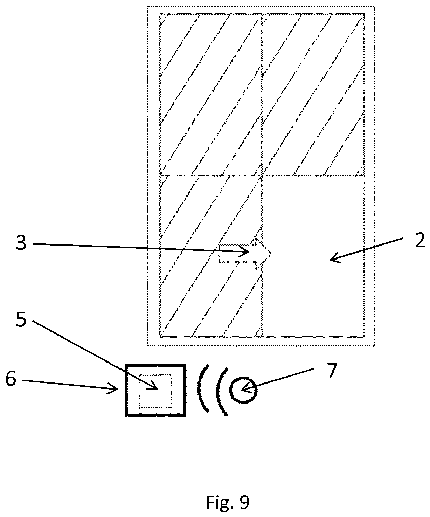

Les figures 7 à 9 montrent la suite de la méthode, les parties hachurées représentant une pile 2 pour laquelle la couche en traitement lors du cycle a déjà été ôtée. On notera en figure 9 que pour le dernier lot à transférer, le bloc 5 se trouve à l'extérieur de la zone de palette, c'est-à-dire sur le récepteur 6.

On peut prévoir des étapes de contrôle qui assurent au manipulateur 3 que le bloc 5 se trouve initialement effectivement au niveau du récepteur 6. Ainsi, au début d'une production, s'il est détecté que le bloc 5 ne se trouve pas dans le récepteur 6, l'unité de contrôle centralisé peut bloquer le fonctionnement et requérir de l'opérateur qu'il place le bloc 5 dans le récepteur 6. Le manipulateur 3 robotique n'est alors animé d'aucun mouvement pour des raisons de sécurité.

On notera que le bloc 5 peut aussi être utilisé en particulier dans les cas où il est possible d'avoir un bloc 5 pour chaque pile 2 pour stabiliser chaque pile 2 lorsque le manipulateur 3 vient effectuer un cycle au cours duquel la forme exacte de l'ensemble des découpes 1 est palpée et détectée par contacts successifs. De même, à la reprise de la production après un arrêt d'urgence, on détecte la présence ou non du bloc 5 dans le récepteur 6. Le cycle d'alimentation n'est possible que si le bloc 5 est détecté comme étant présent dans le récepteur 6. Enfin, on notera que le dispositif de fourniture 1 peut aussi être mis en oeuvre grâce à son unité de contrôle centralisé sans l'existence d'un tel bloc 5 et donc sans la nécessité d'intégrer des étapes de déplacement d'un tel bloc 5. Cela contribue à la versatilité du dispositif de fourniture.

Enfin, afin de garantir une adhérence correcte entre le manipulateur 3 et le bloc 5, il est avantageux de prévoir que les surfaces contre lesquelles la pince de saisie du manipulateur 3 vient s'appliquer soit d'une adhérence particulièrement développée afin d'éviter toute chute du bloc 5.

De manière générale, deux piles 2 adjacentes s'étendent verticalement à partir de la même surface horizontale. Autrement dit, deux piles 2 adjacentes sont en principe supportées par un même support horizontal, généralement une palette ou un intercalaire.

Une pile 2 de découpes 1 est formée uniquement de découpes 1 empilées les unes sur les autres. Ainsi, lorsqu'un intercalaire est disposé entre deux découpes 1, la découpe 1 placée en-dessous de l'intercalaire appartient à une première pile 2 et correspond à la découpe 1 la plus haute de cette pile 2 et la découpe 1 placée au-dessus de l'intercalaire appartient à une deuxième pile 2 et correspond à la découpe 1 la plus basse de cette pile 2.

Les découpes 1 appartenant à une même pile 2 sont disposées les unes sur les autres de sorte à ce que les bords de chaque découpe 1 soit alignés avec les bords des autres découpes 1 de la pile 2. Une pile possède ainsi une forme sensiblement de type parallélépipède rectangle.

Comme indiqué précédemment, selon certains modes de réalisation, lorsque le moyen de pression 4 comprend un bloc 5, ce dernier peut être déplacé à l'aide du manipulateur 3, qui assure le déplacement des découpes.

Dans d'autres modes de réalisation, le bloc 5 peut être déplacé à l'aide d'un moyen de préhension distinct du manipulateur 3. Ainsi, dans ce cas, le dispositif de fourniture comprend un moyen de préhension destiné à assurer les déplacements du bloc 5. Plus précisément, un tel moyen de préhension peut être dédié à assurer la saisie, le déplacement et la dépose du bloc 5.

Grâce à l'invention, il est ainsi possible de transférer des lots de découpes 1 qui sont libres les unes par rapport aux autres, superposées les unes sur les autres, au sein d'une pile 2, et ce sans risquer de dégrader l'empilement d'au moins une pile 2 située à côté. La solution est peu coûteuse puisqu'elle tire profit de l'existence d'un manipulateur 3 robotisé dont la fonction première est le transfert des découpes 1 elles-mêmes pour assurer aussi le déplacement du bloc 5.

Bien que la description ci-dessus se base sur des modes de réalisations particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Dispositif de fourniture pour fournir des découpes (1) à une machine depuis un stock configuré en plusieurs piles (2) adjacentes de découpes (1), le dispositif comprenant un manipulateur (3) pour transférer par lot les découpes (1) depuis le stock jusqu'à la machine,
dispositif **caractérisé en ce que**
il comprend, en outre, un moyen de pression (4) pour comprimer au moins une pile (2) adjacente à celle dont le manipulateur (3) extrait des découpes (1).

2. Dispositif selon la revendication 1, où
le moyen de pression (4) comprend un bloc (5) déplaçable, dont le poids s'exerce sur la pile (2) sur laquelle il est posé.

3. Dispositif selon la revendication 2, où
le manipulateur (3) et le au moins un bloc (5) sont adaptés pour coopérer de sorte que le manipulateur (3) de transfert de lots de découpes (1) assure aussi la saisie, le déplacement et la dépose dudit bloc (5).

4. Dispositif selon la revendication 3, où
le manipulateur (3) est muni d'une pince formant étau pour saisir le bloc (5).

5. Dispositif selon l'une quelconque des revendications 1 à 4, **caractérisé en ce que**
il présente un récepteur (6), qui peut recevoir le bloc (5) lorsqu'il ne repose pas sur une pile (2).

6. Procédé de fourniture de découpes (1) à une machine, depuis un stock sous forme de piles (2) côte à côte, en une ou plusieurs couches, comprenant une étape consistant à saisir, à l'aide d'un manipulateur (3), un lot de découpes (1) d'une desdites piles (2) puis à le déposer dans la machine,
procédé **caractérisé en ce que**
il comprend, en outre, une étape consistant essentiellement à exercer une force de compression sur une pile (2) qui se situe à côté de la celle à partir de laquelle le lot est saisi.

7. Procédé selon la revendication 6, où
la force de compression est obtenue grâce au poids d'un bloc (5) mobile qui vient être positionné sur le haut de la pile (2).

8. Procédé selon la revendication 7, où
le bloc (5) est déposé sur ou pris depuis un récepteur (6) recevant le bloc (5) lorsqu'il n'est pas sur une pile (2), localisé à l'extérieur d'une zone accueillant les piles (2) à traiter.

9. Procédé selon la revendication 8, où
les découpes (1) sont transférées par couche formée par les lots similaires en haut des piles (2) traitées successivement, le bloc (5) étant déposé au niveau du récepteur (6) avant la saisie du dernier lot de la couche et puis y étant pris avant la saisie du premier lot de la couche suivante.

10. Procédé selon l'une quelconque des revendications 7 à 9, où
le déplacement du bloc (5) mobile est opéré par le manipulateur (3).
